# EUROPÄISCHE PATENTSCHRIFT

(11) **EP 4 092 347 B1**
(45) Veröffentlichungstag und Bekanntmachung des Hinweises auf die Patenterteilung: **26.06.2024**
(21) Anmeldenummer: 22167740.4
(22) Anmeldetag: 12.04.2022
(51) Int. Cl.: F24F 13/02, F16L 43/00, F16L 55/033, F24F 13/08, F24F 13/24

(54) **DOWNDRAFT-ELEMENT UND ANORDNUNG**
DOWNDRAFT ELEMENT AND ASSEMBLY
ÉLÉMENT DE TIRAGE DESCENDANT ET AGENCEMENT

(30) Priorität: 21.05.2021 DE 102021113244
(43) Veröffentlichungstag der Anmeldung: 23.11.2022
(73) Patentinhaber: Naber Holding GmbH & Co. KG, 48529 Nordhorn (DE)
(72) Erfinder: Naber, Hans-Joachim, 48527 Nordhorn (DE)
(74) Vertreter: Angerhausen, Christoph

(56) Entgegenhaltungen:
- EP-A1- 1 788 259
- EP-A1- 2 444 710
- DE-B3- 10 360 839
- DE-U1- 9 001 554
- DE-U1-202004 013 575
- KR-A- 20110 019 917
- RU-C2- 2 606 463
- US-A1- 2002 084 138
- US-A1- 2019 316 805

## Beschreibung

Die Erfindung betrifft ein Downdraft-Element mit den Merkmalen des Oberbegriffs des Anspruchs 1**.** Ein entsprechendes Downdraft-Element ist aus der KR 2011 0019917 A bekannt.

Ein weiteres Downdraft-Element ist beispielsweise aus der WO 2018/206046 A1 bekannt. Derartige Downdraft-Elemente sind beispielsweise aus dem Küchenbau bekannt und werden dazu eingesetzt, beim Kochen entstehende Wrasen aus der Küche abzuführen. Bei Durchströmung des Downdraft-Elements wird durch die Strömung Lärm erzeugt, der auch durch die Umlenkung der Strömung verstärkt wird. Diese Geräuschkulisse ist oftmals störend. Insbesondere wenn das Downdraft-Element aus Blech besteht oder ein solches aufweist, kann aufgrund der durch die Durchströmung induzierten Schwingungen im Betrieb eine deutliche Lärmbelästigung auftreten.

Es ist deshalb Aufgabe der vorliegenden Erfindung, ein Downdraft-Element und eine entsprechende Anordnung bereitzustellen, die leiser im Betrieb ist. Diese Aufgabe wird durch ein Downdraft-Element nach Anspruch 1 und eine Anordnung nach Anspruch 15 gelöst. Bevorzugte Ausführungsformen sind Gegenstand der jeweiligen Unteransprüche.

Erfindungsgemäß ist das Downdraft-Element zweischalig mit zwei Schalenteilen ausgebildet, wobei die jeweiligen Schalenteile bevorzugt spiegelsymmetrisch sind, wobei die Schalenteile miteinander verklemmt, verklebt, verschweißt und/oder verschraubt sind.

Der Dämpfer oder eine Oberfläche des Dämpfers kann gekrümmt sein. Der in die Dämpfaufnahme eingesetzte Dämpfer kann derart geformt oder gekrümmt sein, dass er einem Teil einer fluidüberströmten Innenseite oder Innenwand des Downdraft-Elements entsprechen oder bilden kann.

Das Downdraft-Element kann dazu eingerichtet sein, eine Strömung im Wesentlichen in vertikaler Richtung umzulenken. Es kann aber auch vorgesehen sein, dass das Downdraft-Element eine Strömung im Wesentlichen in horizontaler Richtung umlenken kann. Das Downdraft-Element kann ein Rohrbogen sein. Auch wenn der Begriff "Downdraft-Element" eine Umlenkung "nach unten" nahelegt, ist die vorliegende Erfindung nicht zwingend auf eine derartige Umlenkrichtung beschränkt. Die Merkmale der Erfindung, erfindungsgemäße Downdraft-Elemente sowie erfindungsgemäße Anordnungen können beliebige Umlenkrichtungen der Strömung aufweisen. Mit mittlerer Strömungsrichtung kann ein über die Zeit gemittelter Verlauf von Stromlinien des das Dowdraft-Element durchströmenden Fluids gemeint sein.

Das Downdraft-Element kann aus einem Blech bestehen oder ein solches aufweisen. Alternativ oder zusätzlich kann das Downdraft-Element aus einem Kunststoff bestehen oder aufweisen.

Die Dämpfmaterialaufnahme kann im Wesentlichen symmetrisch zu der ersten Strömungsöffnung und der zweiten Strömungsöffnung an einer distalen Innenseite des Downdraft-Elements angeordnet sein. Die distale Innenseite kann einer proximalen Innenseite gegenüberliegen, wobei die distale Innenseite entlang der mittleren Durchströmungsrichtung durch das Downdraft-Element einen größeren Umfang und/oder ein größeres Bogenmaß als die proximale Innenseite aufweisen kann. Der Begriff Bogenmaß impliziert hier nicht zwingend, dass die proximale Innenseite und/oder die distale Innenseite einen Kreisbogen beschreibt oder eine solche Form aufweisen muss.

Die Dämpfmaterialaufnahme kann mindestens ein Halteelement aufweisen, das den in die Dämpfmaterialaufnahme aufgenommenen Dämpfer kraft- und/oder formschlüssig fixieren kann.

Es kann ein im Wesentlichen glatter Übergang zwischen der von dem Fluid überströmbaren Innenseite und der Oberfläche des Dämpfers hergestellt sein. Mit dem Wortlaut "glatt übergeht" kann ein fluidisch glatter Übergang gemeint sein. Die Oberfläche des Dämpfers und/oder die Innenseite kann fluidisch glatt sein.

Die Innenseite kann ein in Strömungsrichtung vor und/oder hinter der Dämpfmaterialaufnahme angeordnetes Strömungsführungselement aufweisen, so dass die Innenseite über das Strömungsführungselement im Wesentlichen glatt in die Oberfläche des Dämpfers übergehen kann. Es kann vorgesehen sein, dass der Dämpfer derart an dem Strömungsführungselement anliegt, dass keine Ablösekante oder dergleichen gebildet ist. Das Strömungsführungselement kann fluidisch glatt sein.

Das Downdraft-Element kann mindestens einen von der Innenseite beabstandeten, zwischen der ersten Strömungsöffnung und der zweiten Strömungsöffnung angeordneten Leitkörper zur Strömungsführung aufweisen. Der Leitkörper kann eine Leitlamelle sein oder aufweisen. Alternativ oder zusätzlich kann der Leitkörper ein Flügelprofil aufweisen und/oder flügelartig geformt sein.

Der Leitkörper kann mit einer Leitfläche im Wesentlichen parallel beabstandet von der Dämpfmaterialaufnahme angeordnet sein und/oder zumindest abschnittsweise der Dämpfmaterialaufnahme zugewandt sein. Alternativ oder zusätzlich kann der Leitkörper kann mit einer Leitfläche im Wesentlichen parallel beabstandet von dem Dämpfer angeordnet sein und/oder zumindest abschnittsweise dem Dämpfer zugewandt sein. Der Leitkörper kann eine entsprechende Krümmung aufweisen oder gekrümmt sein.

Mindestens einer der Leitkörper kann zumindest teilweise gelocht oder perforiert sein oder mindestens einen Durchbruch aufweisen. Die Lochung, die Perforation oder der Durchbruch kann dabei derart angeordnet sein, dass sie bevorzugt in mittlerer Strömungsrichtung im Wesentlichen parallel zu dem Dämpfer beabstandet ist.

Der Leitkörper kann doppelt gekrümmt sein, wobei eine erste Krümmung im Wesentlichen entlang der mittleren Strömungsrichtung und eine zweite Krümmung im Wesentlichen senkrecht zu der ersten Krümmung angeordnet sein kann. Die erste Krümmung und/oder die zweite Krümmung kann mindestens einen Vorzeichenwechsel aufweisen. Es kann vorgesehen sein, die erste und/oder zweite Krümmung lokal geeignet zu variieren, so dass ein mittlerer Druckverlust des Downdraft-Elements reduziert ist.

Mindestens eine Innenseite, bevorzugt eine distale und/oder eine proximale Innenseite, kann entlang der mittleren Strömungsrichtung zumindest in einem Abschnitt teilkreisbogenartig ausgebildet sein, wobei der lokale Krümmungsradius des Abschnitts bevorzugt variabel ausgebildet sein kann. Damit kann die von dem Fluid überströmte proximale und/oder distale Innenseite von einem perfekten Teilkreis bzw. Zylinderwand, beispielsweise einem Vierteilkreis oder einer entsprechenden Zylinderwand bei einem Winkel α von 90°, zumindest lokal abweichen. Es kann aber auch vorgesehen sein, dass proximale und/oder distale Innenseite zumindest annähernd einen perfekten Teilkreis bzw. entsprechende Zylinderwand bildet. Es kann vorgesehen sein, den lokalen Krümmungsradius geeignet zu variieren, so dass ein mittlerer Druckverlust des Downdraft-Elements reduziert ist.

Das Downdraft-Element ist zweischalig mit zwei Schalenhälften ausgebildet, wobei die jeweiligen Schalenteile bevorzugt spiegelsymmetrisch sein können, wobei die die Schalenteile miteinander verklemmt, verklebt, verschweißt und/oder verschraubt sind. Damit lassen sich z.B. Leitkörper oder Dämpfer einfach und bequem in das Downdraft-Element einsetzen oder austauschen.

Das Downdraft-Element kann an oder bei der ersten Strömungsöffnung und/oder zweiten Strömungsöffnung eine Befestigungsaufnahme aufweisen, in die ein Rohrsystem-Element zur Herstellung einer fluidischen Verbindung des Rohrsystem-Elements mit dem Downdraft-Element einführbar sein kann. Das Rohrsystem-Element kann beispielsweise ein weiteres Downdraft-Element, ein Rohr, ein Flachkanal, ein Umlenkstück oder dergleichen sein oder aufweisen. Bevorzugt kann ein Anschlag in der Befestigungsaufnahme bevorzugt umlaufend angeordnet sein, der eine definierte Einführtiefe des Rohrsystem-Elements festlegen kann. Das Rohrsystem-Element kann ein Teil eines Rohrsystems sein.

Das Downdraft-Element kann einen Befestigungssteg aufweisen mit dem das Downdraft-Element in ein Rohrsystem-Element zur Herstellung einer fluidischen Verbindung des Downdraft-Element mit dem Rohrsystem-Element einführbar sein kann. Das Rohrsystemelement kann beispielsweise ein weiteres Downdraft-Element, ein Rohr, ein Flachkanal, ein Umlenkstück oder dergleichen sein oder aufweisen. Bevorzugt kann der Befestigungssteg einen bevorzugt umlaufend angeordneten Anschlag aufweisen, der eine definierte Einführtiefe des Downdraft-Elements festlegen kann. Das Rohrsystem-Element kann ein Teil eines Rohrsystems sein. Der Anschlag des Befestigungsstegs kann an einer Außenseite des Befestigungsstegs angeordnet sein.

Das Downdraft-Element kann mindestens eine an und/oder bei der ersten Strömungsöffnung und/oder der zweiten Strömungsöffnung angeordnete Rastnase aufweisen, über die das Downdraft-Element lösbar mit dem Rohrsystem-Element verbindbar sein kann. Das Rohrsystem-Element kann beispielsweise ein weiteres Downdraft-Element, ein Rohr, ein Flachkanal, ein Umlenkstück oder dergleichen sein oder aufweisen. Das Rohrsystem-Element kann ein Teil eines Rohrsystems sein.

Das Downdraft-Element kann bevorzugt an einer Außenseite eine Markierung aufweisen, die eine Durchströmungsrichtung durch die Strömungsöffnungen mit geringstem mittleren Druckverlust anzeigen kann. Es kann vorgesehen sein, dass das Downdraft-Element aufgrund seiner Form, der Dämpfmaterialaufnahme mit darin aufgenommenem Dämpfer und/oder der Krümmungen des Leitelements und/oder der Innenseiten eine bevorzugte Durchströmungsrichtung aufweist. Durch die Markierung kann bei der Montage die bevorzugte Durchströmungsrichtung einfach und bequem berücksichtigt werden, so dass sich ein geringerer Druckverlust des Downdraft-Elements und mithin des Gesamtsystems ergeben kann.

Die Erfindung betrifft weiterhin eine Anordnung aus einem Downdraft-Element und mindestens einem Rohrsystem-Element mit einer Öffnung, wobei
a. das Downdraft-Element an und/oder bei der ersten Strömungsöffnung und/oder der zweiten Strömungsöffnung mindestens eine Rastnase und das Rohrsystem-Element mindestens eine zu der Rastnase komplementäre Rastaufnahme aufweist, über die die erste Strömungsöffnung und/oder die zweiten Strömungsöffnung des Downdraft-Element und die Öffnung des Rohrsystem-Element lösbar fluidisch miteinander verbunden sind, und/oder
b. das Downdraft-Element an oder bei der ersten Strömungsöffnung und/oder zweiten Strömungsöffnung eine Befestigungsaufnahme aufweist und das Rohrsystem-Element an der Öffnung einen bevorzugt umlaufenden Befestigungsvorsprung aufweist, wobei der Befestigungsvorsprung in der Befestigungsaufnahme aufgenommen und die erste Strömungsöffnung und/oder die zweite Strömungsöffnung des Downdraft-Elements mit der Öffnung des Rohrsystem-Elements fluidisch verbunden ist, und/oder
c. das Downdraft-Element an oder bei der ersten Strömungsöffnung und/oder zweiten Strömungsöffnung einen Befestigungssteg aufweist und das Rohrsystem-Element an der Öffnung eine Einsteckaufnahme aufweist, wobei der Befestigungssteg in der Einsteckaufnnahme aufgenommen und die erste Strömungsöffnung und/oder die zweite Strömungsöffnung des Downdraft-Elements mit der Öffnung des Rohrsystem-Elements fluidisch verbunden ist.

Durch die damit hergestellte feste und sichere Verbindung des Downdraft-Elements mit dem Rohrsystem-Element können prinzipiell Schwingungen des Downdraft-Elements an das Rohrsystem-Element übertragen werden, insbesondere wenn diese aus Blech bestehen oder ein solches aufweisen, so dass bei Durchströmung Lärm entstehen kann. Zudem kann die Verbindung der beiden Elemente kann mit der Zeit gelockert werden, sofern keine weiteren Vorkehrungen getroffen sind. Der Dämpfer des Downdraft-Elements kann somit durch die Durchströmung induzierte Schwingungen des Downdraft-Elements verringern und damit sowohl die Geräuschkulisse des Rohrsystems reduzieren wie auch die Lebensdauer der Verbindung erhöhen. Das Rohrsystem-Element kann beispielsweise ein weiteres Downdraft-Element, ein Rohrverbinder, ein Umlenkstück oder dergleichen sein oder aufweisen.

Das Downdraft-System kann mindestens einen Leitkörper zur Strömungsführung und das Rohrsystem-Element mindestens einen Rohrsystem-Strömungsleitkörper aufweisen, wobei
a. der Rohrsystem-Strömungsleitkörper in das das Downdraft-Element hineinragen kann und/oder
b. der Rohrsystem-Strömungsleitkörper in den Leitkörper übergehen und/oder in Strömungsrichtung parallel vor und/oder hinter dem Leitkörper angeordnet sein kann.

Damit kann eine gute Durchströmbarkeit des Downdraft-Elements erzielt werden. Der Druckabfall des Downdraft-Elements kann verringert werden.

Die Erfindung wird anhand der nachfolgenden Figuren genauer erläutert. Dabei zeigen:
- Fig. 1: eine perspektivische Ansicht einer Ausführungsform eines erfindungsgemäßen Downdraft-Elements;
- Fig. 2: eine Schnittansicht einer Ausführungsform eines erfindungsgemäßen Downdraft-Elements;
- Fig. 3: eine beispielhafte Ausführungsform eines Dämpfers;
- Fig. 4: eine beispielhafte doppeltgekrümmte Fläche mit einem beispielhaften Verlauf der ersten und der zweiten Krümmung;
- Fig. 5: weitere beispielhafte Verläufe der ersten und der zweiten Krümmung;
- Fig. 6: perspektivische Ansichten weiterer beispielhafter Ausführungsformen erfindungsgemäßer Downdraft-Elemente;
- Fig. 7: noch weitere beispielhafte Ausführungsformen erfindungsgemäßer Downdraft-Elemente;
- Fig. 8: eine beispielhafte erfindungsgemäße Anordnung eines Downdraft-Elements und eines Rohrsystem-Elements; und
- Fig. 9: eine weitere beispielhafte erfindungsgemäße Anordnung eines Downdraft-Elements und Rohrsystem-Elementen.

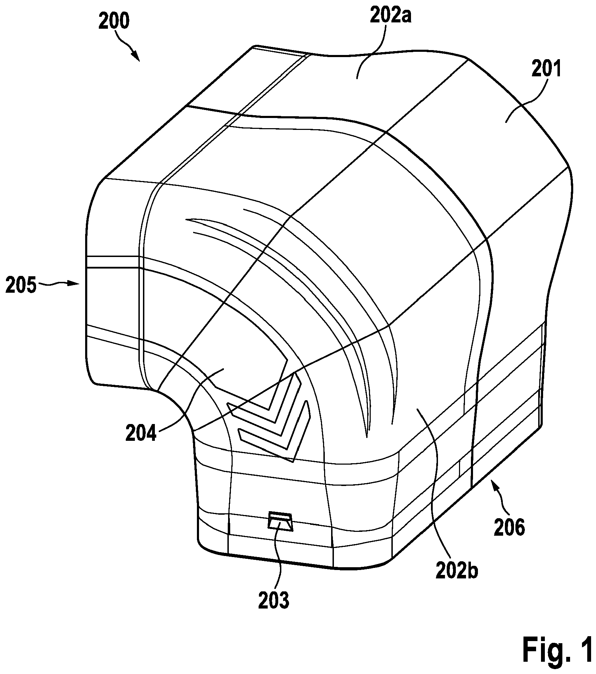

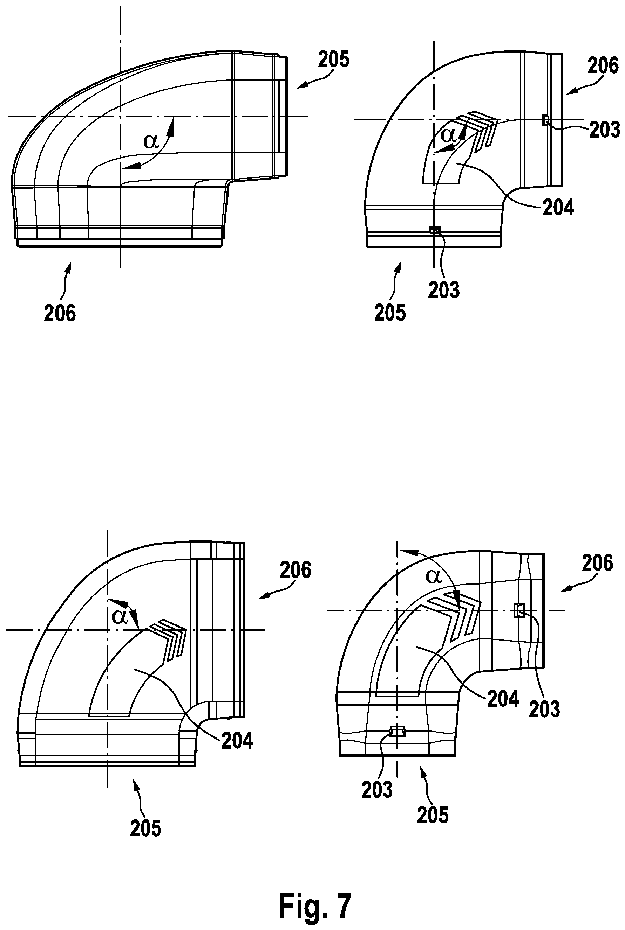

Figur 1 zeigt eine erste erfindungsgemäße Ausführungsform eines Downdraft-Elements 200. Das Downdraft-Element 200 weist eine Dämpfermaterialaufnahme 201 auf, in die ein Dämpfer 214 eingesetzt ist. Das Downdraft-Element 200 weist eine erste Strömungsöffnung 205 und eine zweite Strömungsöffnung 206 auf. Durch die Strömungsöffnung 205, 206 kann ein Fluid, beispielsweise Gase oder Wrasen, das Downdraft-Element durchströmen. Die Strömungsöffnungen 205, 206 sind unter einem Winkel α zueinander angeordnet, wobei der Winkel 45° ≤ α ≤ 135° betragen kann (vgl. auch Fig. 7). Bei dem in Figur 1 gezeigten Ausführungsbeispiel beträgt der Winkel α im Wesentlichen 90°. Damit wird durch das Downdraft-Element 200 das das Downdraft-Element 200 durchströmende Fluid zumindest in seiner mittlerem Strömungsrichtung um einen entsprechenden Winkel α umgelenkt. Insbesondere kann das Fluid von einer im Wesentlichen horizontalen Strömungsrichtung in eine im wesentlichen vertikale Strömungsrichtung umgelenkt sein oder werden. Die Richtung der Umlenkung, bzw. die Orientierung des Downdraft-Element 200 sowie der Winkel α sind aber nicht auf die in den Figuren 1 bis 9 gezeigten Ausführungsbeispiele beschränkt. Es kann auch vorgesehen sein, mit dem Downdraft-Element ein Fluid beispielsweise in einer Ebene um einen Winkel umzulenken. Damit kann das Downdraft-Element 200 nicht ausschließlich auf eine Umlenkung von einer im Wesentlichen horizontalen in eine im Wesentlichen vertikale Richtung eingeschränkt sein.

Das Downdraft-Element 200 kann in einer Zweikomponentenbauweise ausgebildet sein. Das Downdraft-Element 200 ist zweischalig mit zwei Schalenteilen 202a, 202b ausgebildet, beispielsweise kann das Downdraft-Element 200 aus zwei bevorzugt spiegelsymmetrischen Schalenteilen bzw. Halbteilen 202a, 202b bestehen oder solche aufweisen. Die beiden Halbteile 202a, 202b sind miteinander verklemmt, ineinander gesteckt, verklebt und/oder verschweißt, oder können sonstwie geeignet miteinander verbunden sein. Die Verbindung der beiden Halbteile 202a, 202b kann fluidisch dicht sein.

Das Downdraft-Element 200 kann eine Rastnase 203 aufweisen. Über die Rastnase 203 kann das Downdraft-Element 200 lösbar mit beispielsweise einem weiteren Downdraft-Element 200 oder einem anderen Rohrsystem-Element, beispielsweise einem Rohrverbinder, einem Rohr, einem Flachkanal, einem Rohrbogen oder dergleichen verbunden sein oder werden. Das weiteren Downdraft-Element oder das Rohrsystem-Element kann ein zu der Rastnase 203 komplementäre Rastaufnahme aufweisen.

Es kann vorgesehen sein, dass das Downdraft-Element 200 eine bevorzugte Durchströmungsrichtung aufweist. Die bevorzugte Durchströmungsrichtung kann dadurch bestimmt sein, dass der Druckverlust bei der Durchströmung in der Bevorzugung Durchströmungsrichtung minimiert und/oder minimal ist. Bei der in Figur 1 gezeigten Ausführungsform kann beispielsweise der Druckverlust bei einer Einströmung in die erste Strömungsöffnung 205 und einer Ausströmung aus der zweiten Strömungsöffnung 206 kleiner als der Druckverlust bei einer Einströmung in die zweite Strömungsöffnung 206 und Ausströmung aus der ersten Strömungsöffnung 205 sein. Das Downdraft-Element 200 kann bevorzugt an einer Außenseite eine Markierung 204 aufweisen, das die bevorzugte Strömungsrichtung anzeigen kann. Damit kann insbesondere eine fehlerhafte Montage, bei der das Downdraft-Element 200 im Betrieb ungünstig entgegen der beabsichtigen Strömungsrichtung durchströmt wird, vermieden werden.

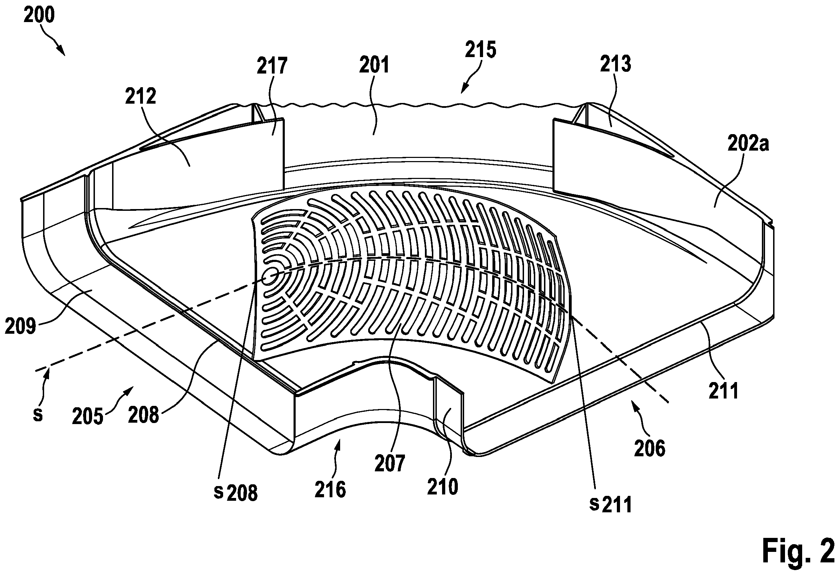

Eine weitere erfindungsgemäße Ausführungsform eines Downdraft-Elements 200 ist in Figur 2 in einer perspektivischen Schnittansicht dargestellt. Der abgebildete Teil des Downdraft-Elements 200 kann dabei einem Schalenteil bzw. Halbteil 202a (oder 202b) entsprechen, das gemeinsam mit einem nicht abgebildeten zweiten Halbteil 202b (oder 202a) das Downdraft-Element 200 bilden kann. Die beiden Halbteile 202a, 202b können spiegelsymmetrisch sein. Eine Dämpfmaterialaufnahme 201 kann an einer Innenwand oder Innenseite des Downdraft-Elements 200 angeordnet sein. Es kann vorgesehen sein, dass die Dämpfmaterialaufnahme 201 an einer distalen Innenseite 215 angeordnet ist. Wie in Figur 2 gezeigt kann die distale Innenseite 215 einer proximalen Innenseite 216 gegenüberliegenden, wobei die distale Innenseite 215 entlang der mittleren Durchströmungsrichtung durch das Downdraft-Element 200 einen größeren Umfang und/oder ein größeres Bogenmaß als die proximale Innenseite 216 aufweisen. Der Begriff Bogenmaß impliziert hier nicht zwingend, dass die proximale Innenseite 216 und/oder die distale Innenseite 215 einen Kreisbogen beschreibt oder eine solche Form aufweisen muss. Die lokale Krümmung der distalen Innenseite 215 und/oder der proximalen Innenseite 216 kann entlang den jeweiligen Innenseiten variieren. Es kann auch vorgesehen sein, dass mindestens eine der mit den Innenseiten 215, 216 den Innenraum des Downdraft-Elements 200 bildenden weiteren Innenwände (oder Innenseiten) eine lokal variierende Krümmung aufweisen.

In die Dämpfmaterialaufnahme 201 ist ein nicht in Figur 2 gezeigter Dämpfer 214 aufgenommen. Durch den Dämpfer 214 können z.B. Druckfluktuationen eines das Downdraft-Element 200 durchströmenden Fluids gedämpft werden, so dass durch das Fluid erzeugte Strömungsgeräusche reduziert werden. Der Dämpfer 214 kann ein Schalldämpfer sein oder als solcher dienen. Die Dämpfmaterialaufnahme 201 kann im Wesentlichen symmetrisch zu der ersten Strömungsöffnung 205 und der zweiten Strömungsöffnung 206 angeordnet sein. Insbesondere kann die Dämmmaterialaufnahme 201 wie in Figur 2 dargestellt entlang der Innenseite mittig zwischen der ersten Strömungsöffnung 205 und der zweiten Strömungsöffnung 206 angeordnet sein. Die Dämpfmaterialaufnahme 201 kann bevorzugt an oder bei der distalen Innenseite 215 angeordnet sein.

Die Dämpfmaterialaufnahme 201 kann mindestens ein Halteelement 217 aufweisen. Mit dem Halteelement 217 kann der in die Dämpfermaterialaufnahme 201 aufgenommene Dämpfer 214 fixiert sein oder werden. Das Halteelement 217 kann einen Steg aufweisen, der z.B. eine nutförmige Aufnahme für ein Ende des Dämpfers 214 bildet.

Der Dämpfer 214 ist derartig geformt, dass ein im Wesentlichen glatter Übergang zwischen der von dem Fluid überströmbaren Innenwand bzw. Innenseite 215 und der Oberfläche des Dämpfers 214 hergestellt ist. Der Dämpfer 204 kann zumindest an einer von dem Fluid überströmbaren Oberfläche ein Material aufweisen, dass ein im Wesentlichen glatter Übergang zwischen der von dem Fluid überströmbaren Innenwand bzw. Innenseite 215 und der Oberfläche des Dämpfers 214 hergestellt sein kann. Der in die Dämpfmaterialaufnahme 201 eingesetzte Dämpfer 214 kann damit einen Teil der Innenwand bzw. Innenseite des Downdraft-Elements 200 bilden. Die von dem Fluid überströmte Oberfläche des Dämpfers 214 kann fluidisch glatt sein.

In Strömungsrichtung vor und/oder hinter der Dämpfmaterialaufnahme 201 kann mindestens ein Strömungsführungselement 212 angeordnet sein. Insbesondere kann das Strömungsführungselement 212 ein das Downdraft-Element 200 durchströmendes Fluid zu dem Dämpfer 214 führen. Damit kann der Übergang der Innenseite 215 bzw. deren von dem Fluid überströmbaren Teil zu dem Dämpfer 214 strömungsgünstig erfolgen und/oder höchstens einen vernachlässigbar kleinen zusätzlichen Strömungswiderstand aufweisen. Es kann vorgesehen sein, dass der in die Dämpfmaterialaufnahme 201 eingesetzte Dämpfer 214 derart geformt ist, dass er mit dem Halteelement 217 und/oder dessen Steg bevorzugt glatt abschließt bzw. das Halteelement oder der Steg 217 nicht von dem Dämpfer 214 abgestuft ist, um damit mögliche Ablösekanten zu vermeiden. Ein eventuell vorliegender Spalt zwischen Dämpfer 214 und Strömungsführungselement 212 derart klein ausgebildet sein, dass höchstens ein vernachlässigbar kleiner zusätzlichen Strömungswiderstand auftreten kann.

Das Downdraft-Element 200 kann mindestens einen Leitkörper 207 aufweisen. Der Leitkörper 207 kann zwischen der ersten Strömungsöffnung 205 und der zweiten Strömungsöffnung 206 angeordnet sein und das das Downdraft-Element 200 durchströmende Fluid führen und/oder dessen Umlenkung unterstützen. Damit kann der Druckverlust der Strömung durch den Leitkörper 207 reduziert werden. Der Leitkörper 207 kann eine Leitlamelle sein bzw. eine lamellenartige Form aufweisen. Der Leitkörper 207 kann aber auch eine Flügelform aufweisen. Der Leitkörper 207 kann doppelt gekrümmt sein. Es kann vorgesehen sein, dass mindestens eine der Krümmungen des Leitkörpers 207 nicht konstant ist. Mindestens eine der Krümmung des Leitkörpers 207 kann einen Vorzeichenwechsel aufweisen. Der Leitkörper 207 kann parallel beabstandet zu der Dämpfmaterialaufnahme 201 in dem Downdraft-Element 200 angeordnet sein. Der Leitkörper 207 kann bezogen auf die Strömungsöffnungen 205, 206 mittig angeordnet sein. Es kann aber auch vorgesehen sein, dass der Leitkörper 207 näher zu der distalen Innenseite 215 oder der proximalen Innenseite 216, wie in Figur 2 gezeigt, angeordnet ist. Es kann vorgesehen sein, dass mindestens zwei Leitkörpers parallel und zumindest abschnittsweise im Wesentlichen senkrecht zueinander beabstandet in dem Downdraft-Element 200 angeordnet sind. Der Leitkörper 207 kann zumindest teilweise gelocht und/oder perforiert sein oder mindestens ein Durchbruch aufweisen. Die Lochung bzw. die Durchbrüche können ein Muster aufweisen, beispielsweise das in Figur 2 gezeigte kreisförmige Muster. Es kann aber auch vorgesehen sein, dass die Lochung bzw. Durchbrüche nicht gleich- oder regelmäßig über den Leitkörper 207 verteilt sind. Damit kann ein Druckausgleich der von dem Leitkörper 207 aufgeteilten Teilfluidströme über bzw. durch oder quer zum Leitkörper 207 erfolgen. Druckfluktuationen des von dem Dämpfer 214 abgewandten Teilfluidstroms können damit zum Dämpfer 214 transportiert und durch den Dämpfer 214 gedämpft werden. Alternativ oder zusätzlich können zwei oder mehr, ggf. auch nicht-gelochte oder nicht mit Durchbrüchen versehene Leitkörper 207 in dem Downdraft-Element 200 in Strömungsrichtung hintereinander angeordnet sein, wobei zwischen den Leitkörpern eine Lücke ausgebildet sein kann oder die Leitkörper seitlich zueinander versetzt sein können. Auch in diesem Falle können Druckfluktuationen effektiv durch den Dämpfer 214 gedämpft werden.

Das Downdraft-Element 200 kann eine Befestigungsaufnahme 209 aufweisen. An einer Innenseite der Festungsaufnahme 209 kann ein Anschlag 208 angeordnet sein. In die Befestigungsaufnahme 209 kann ein weiteres Downdraft-Element und/oder ein Rohrsystemelement, beispielsweise ein Rohrverbinder oder ein Umlenkstück, eingeführt sein oder werden. Der Anschlag 208 kann eine Einführungstiefe der Befestigungsaufnahme 209 festlegen. Zum Beispiel kann ein entsprechendes weiteres Downdraft-Element oder Rohrsystem-Element in die Befestigungsaufnahme 209 bis zum Anschlag 208 eingeführt sein. Das Downdraft-Element 200 kann einen Befestigungssteg 210 aufweisen, mit dem das Downdraft-Element 200 in ein weiteres Downdraft-Element, z.B. in dessen Befestigungsaufnahme 209, oder in ein Rohrsystem-Element eingeführt werden kann. Der Befestigungssteg 210 kann einen Anschlag 211 aufweisen, der eine definierte Einführtiefe des Befestigungsstegs 210 festlegen kann. Über die Befestigungsaufnahmen 209 und/oder den Befestigungssteg 210 kann das Downdraft-Element 200 fluidisch mit mindestens einem weiteren Downdraft-Element und/oder mindestens einem Rohrsystem-Element verbunden sein oder werden. Durch den Hohlraum 213 kann die Steifigkeit des Downdraft-Elements erhöht sein oder werden.

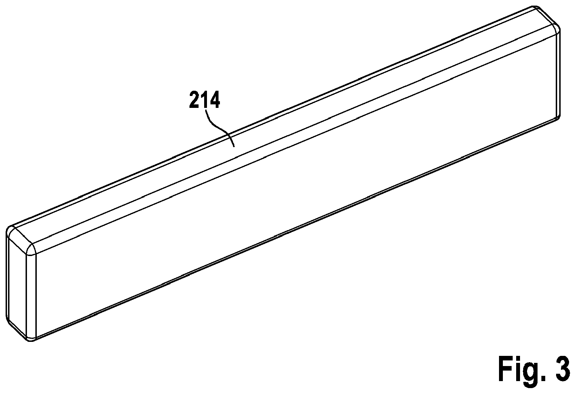

In Figur 3 ist ein beispielhafter Dämpfer 214 dargestellt. Der Dämpfer 214 kann eine Dämpfmatte sein oder aufweisen. Der Dämpfer 214 kann einen Kunststoff, einen Schaumstoff oder dergleichen sein oder aufweisen.

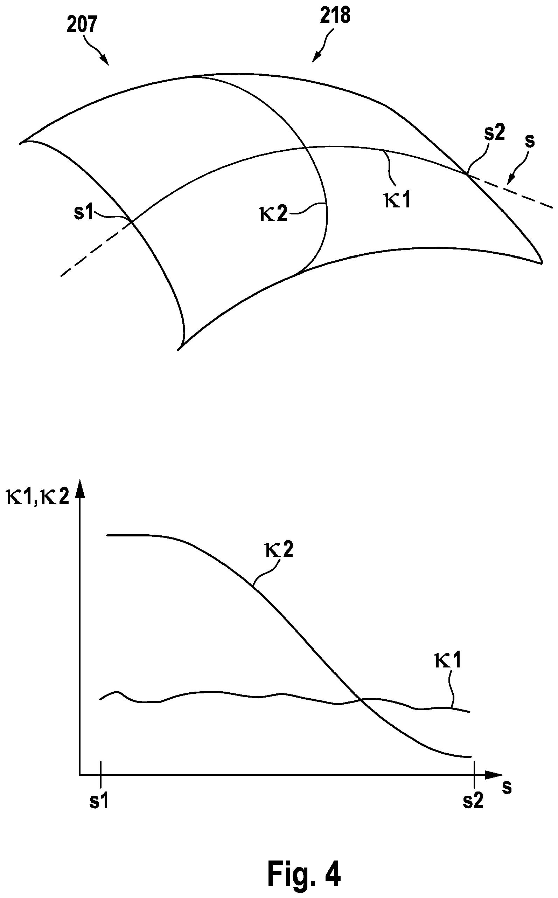

Figur 4 zeigt beispielhaft eine doppelgekrümmte Fläche 218. Die doppelgekrümmte Fläche 218 kann beispielsweise zumindest einen Abschnitt eines Leitkörpers 207 oder einer Innenwand oder Innenseite des Downdraft-Elements 200 sein oder symbolisch darstellen. Die beiden Krümmungen κ₁ und κ₂ der doppelgekrümmte Fläche 218 können dabei eine Funktion der Flächenkoordinaten sein. Beispielhaft ist in Figur 4 eine Variation der beiden Krümmungen κ₁ und κ₂ entlang einer Linie s zwischen den Punkten s₁ und s₂ auf der doppelgekrümmte Fläche 218 dargestellt. Die Linie s der Figur 4 kann der in Figur 2 dargestellten Linie des Leitelement 207 entsprechen, wobei der Punkt s₁ an oder bei dem Anschlag 208 und der Punkt s₂ an oder bei dem Anschlag 211 angeordnet sein kann. Bei dem in Figur 4 dargestellten Ausführungsbeispiel ist die erste Krümmungen κ₁ entlang der Linie s im Wesentlichen konstant, wobei die zweite Krümmung κ₂ an Punkt s₁ einen hohen positiven Wert (größer als κ₁) und am Punkt s₂ einen geringen positiven Wert (kleiner κ₁) aufweist. Es ist offensichtlich, dass das Vorzeichen der beiden Krümmungen κ₁ und κ₂ von der Definition der Flächennormale der doppelgekrümmten Fläche 218 abhängt. Würde das Vorzeichen der Flächennormale der doppelgekrümmte Fläche 218 umgekehrt (bzw. die Flächennormale mit einem umgekehrten Vorzeichen definiert), so würden sich die Vorzeichen sowohl der ersten Krümmung κ₁ als auch der zweite Krümmung κ₂ ebenfalls umkehren.

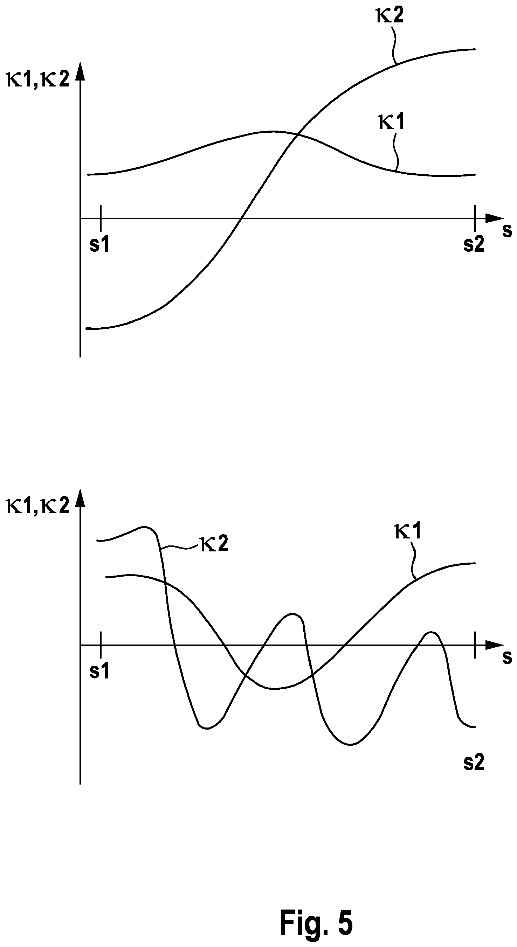

Figur 5 zeigt zwei weitere beispielhafte Verläufe entlang einer Linie s von (nicht in den Figuren gezeigten) doppelgekrümmten Flächen. Beispielsweise weist die zweite Krümmung κ₂ entlang der Linie s zwischen den Punkten s₁ und s₂ einen Vorzeichenwechsel auf, während die erste Krümmungen κ₁ entlang derselben Linie s keinen Vorzeichenwechsel erfährt. In einem zweiten Beispiel weist die erste Krümmung κ₁ zwei Vorzeichenwechsel und die zweite Krümmung κ₂ fünf Vorzeichenwechsel entlang der Linie s zwischen den Punkten s₁ und s₂ auf.

Ist die doppelgekrümmte Fläche ein Leitelement 207, so kann vorgesehen sein, dass entlang einer Linie s auf der Oberfläche des Leitelements 207 mindestens eine der beiden Krümmungen κ₁ und κ₂ mindestens einen Vorzeichenwechsel aufweist. Dies ist in Figur 2 beispielhaft dargestellt: zwischen den Punkten s₂₀₈ und s₂₁₁ (die den Punkten s₁ und s₂ entsprechen können) der Linie s des Leitelements 207 wechselt die zweite Krümmung κ₂ ihr Vorzeichen, während die erste Krümmung κ₁ keinen Vorzeichenwechsel erfährt. Es kann insbesondere vorgesehen sein, den Betrag und das Vorzeichen der jeweiligen Krümmungen bzw. den Vorzeichenwechsel derart zu wählen, dass die Strömung durch das Downdraft-Element 200 aufgrund der jeweiligen Krümmungen des Leitelement 207 und/oder der Innenwände besonders verlustarm umgelenkt wird. Durch die verbesserte Umlenkung und den geringeren Druckverlust aufgrund der geeignet angepassten Krümmungen kann dabei ebenfalls eine Verringerung der Strömungsgeräusche erzielt werden. Es kann zudem vorgesehen sein, die entsprechenden Krümmungen lokal geeignet derart anzupassen, dass Druckfluktuationen vermieden oder zumindest reduziert werden.

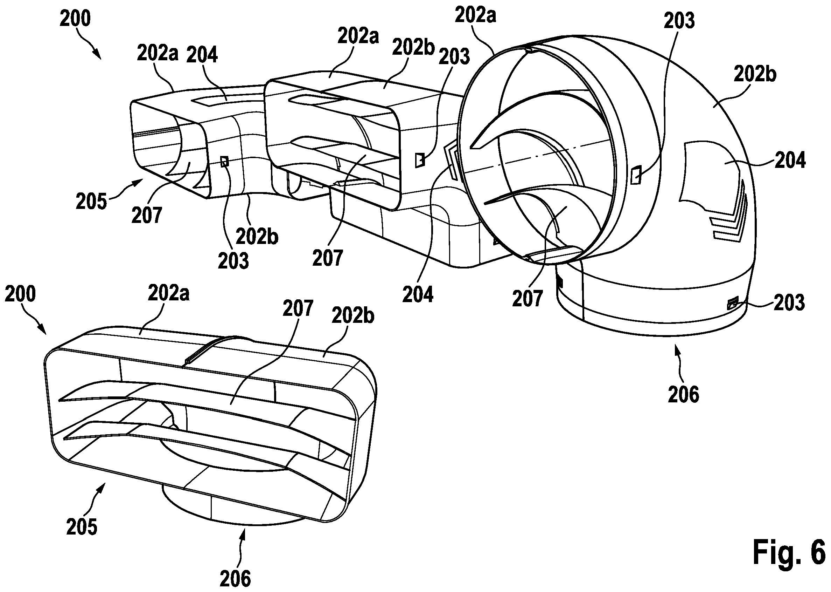

In den Figuren 6 und 7 sind beispielhafte Ausführungsformen von erfindungsgemäßen Downdraft-Elementen 200 dargestellt. Diese können wie in Figur 6 gezeigt eine Zweikomponentenbauweise aufweisen, wobei die beiden Komponenten bzw. Halbteile 202a, 202b spiegelsymmetrisch sein können. Wie in den Figuren gezeigt können die Downdraft-Elemente 200 dazu eingerichtet sein, Rundrohre und/oder Flachkanäle oder dergleichen aufzunehmen bzw. mit solchen fluidisch verbunden zu werden. Insbesondere kann die Befestigungsaufnahme 209 und/oder der Befestigungssteg 210 eine runde, ovale, rechteckige oder polygonale Form oder dergleichen aufweisen. Das Downdraft-Element 200 kann wie in Figur 6 dargestellt an einer Außenseite eine Markierung 204 aufweisen, das eine präferierte Durchströmungsrichtung anzeigen kann. Eine solche präferierte Durchströmungsrichtung kann beispielsweise durch die Form und/oder die variablen Krümmungen κ₁ und κ₂ des Leitelements 207 und/oder der Innenwände bzw. Innenseite (z.B. der distalen Innenseite 215 und/oder proximalen Innenseite 216) gegeben sein.

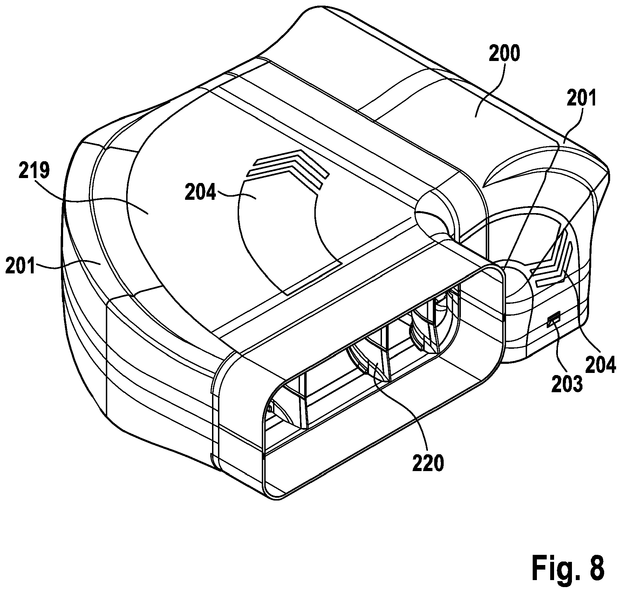

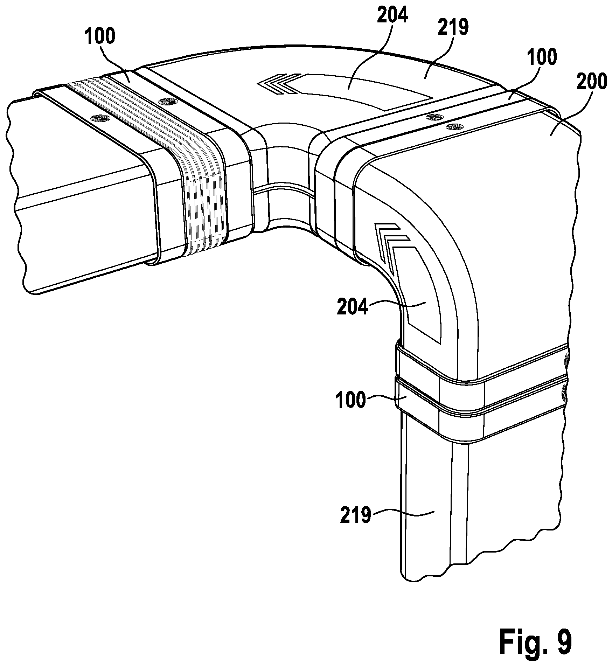

Figuren 8 und 9 zeigen eine Anordnung eines Downdraft-Elements 200 und mindestens eines damit verbundenen Rohrsystem-Elements. Das Rohrsystem-Element 219 kann beispielsweise ein Rohrbogen, ein Verbindungselement 100, ein Flachkanal, ein Rundkanal und/oder ein weiteres Downdraft-Element sein oder aufweisen. Bevorzugt sind das Downdraft-Element 200 und das Rohrsystem-Element fluidisch dicht miteinander verbunden. Weist das Rohrsystem-Element Rohrsystem-Strömungsleitkörper auf, so kann vorgesehen sein, dass der oder die Rohrsystem-Strömungsleitkörper in das Downdraft-Element 200, bevorzugt die Befestigungsaufnahme 209 und/oder die von dem Befestigungssteg 210 gebildete Aufnahme, hineinragen. Alternativ oder zusätzlich kann vorgesehen sein, dass der oder die Rohrsystem-Strömungsleitkörper mit dem mindestens einem Leitkörper 207 des Downdraft-Elements 200 abschließend oder in diese übergehen. Das Downdraft-Element 200 kann mindestens eine Rastnase 203 und das Rohrsystem-Element mindestens eine zu der Rastnase 203 komplementäre Rastaufnahme aufweisen, über die die erste Strömungsöffnung 205 und/oder die zweiten Strömungsöffnung 206 des Downdraft-Element und eine Öffnung des Rohrsystem-Element lösbar fluidisch miteinander verbunden sind. Die Rastnase 203 kann an oder in der Befestigungsaufnahme 209 und/oder dem Befestigungssteg 210 angeordnet sein. Das Downdraft-Element 200 kann in das Rohrsystem-Element eingesteckt oder eingeführt sein. Alternativ kann auch das Rohrsystem-Element in das Downdraft-Element 200 eingesteckt oder eingeführt sein. Es kann vorgesehen sein, dass das Rohrsystem-Element 219 mit dem Downdraft-Element 200 über einen Verbinder 100 verbunden ist. Der Verbinder 100 kann ein in der DE 10 2021 113 246 A1 offenbarter Rohrverbinder sein. Das Rohrsystem-Element 219 kann ein in der DE 10 2021 113 246 A1 offenbarter Rohrbogen sein.

Das Rohrsystem-Element 219 kann mindestens einen Rohrsystem-Strömungsleitkörper 220 aufweisen. Ist das Rohrsystem-Element 219 mit dem Downdraft-Element 200 verbunden, so kann vorgesehen sein, dass der Rohrsystem-Strömungsleitkörper 220 in das Downdraft-Element 200, z.B. in die erste Strömungsöffnung 205 oder die zweite Strömungsöffnung 206, hineinragt. Ist das Rohrsystem-Element 219 mit dem Downdraft-Element 200 über einen Verbinder 100 verbunden, so kann der Rohrsystem-Strömungsleitkörper 220 in den Verbinder 100 hineinragen oder durch diesen hindurch in das Downdraft-Element 200 überstehen. Es kann vorgesehen sein, dass mindestens ein Rohrsystem-Strömungsleitkörper 220 mit mindestens einem Leitkörper 207 ausgerichtet ist, in diesen übergeht und/ oder bevorzugt bündig abschließt.

### Bezugszeichenliste

- 200: Downdraft-Element
- 201: Dämpfmaterialaufnahme
- 202a: Schalenteil
- 202b: Schalenteil
- 203: Rastnase
- 204: Markierung
- 205: erste Strömungsöffnung
- 206: zweite Strömungsöffnung
- 207: Leitkörper
- 208: Anschlag
- 209: Befestigungsaufnahme
- 210: Befestigungssteg
- 211: Anschlag
- 212: Strömungsführungselement
- 213: Hohlraum
- 214: Dämpfer
- 215: distale Innenseite
- 216: proximale Innenseite
- 217: Halteelement
- 218: doppelt gekrümmte Fläche
- 219: Rohrsystem-Element
- 220: Rohrsystem-Strömungsleitkörper
- 100: Verbinder

## Patentansprüche

1. Downdraft-Element (200) mit einer ersten Strömungsöffnung (205) und einer zweiten Strömungsöffnung (206), wobei die erste Strömungsöffnung (205) relativ zu der zweiten Strömungsöffnung (206) unter einem Winkel 45° ≤ α ≤ 135°, bevorzugt im Wesentlichen von 90°, angeordnet ist, so dass zumindest die mittlere Strömungsrichtung eines in die erste Strömungsöffnung (205) eintretenden und aus der zweiten Strömungsöffnung (206) oder umgekehrt austretenden Fluids um den Winkel α umlenkbar ist, wobei das Downdraft-Element (200) an einer Innenseite (215, 216) zwischen der ersten Strömungsöffnung (205) und der zweiten Strömungsöffnung (206) mindestens eine Dämpfmaterialaufnahme (201) und mindestens einen in die Dämpfmaterialaufnahme (201) eingesetzten Dämpfer (214) aufweist, wobei der Dämpfer (214) derartig geformt ist, dass die von dem Fluid überströmbare Innenseite (215, 216) im Wesentlichen glatt in die Oberfläche des Dämpfers (214) übergeht, **dadurch gekennzeichnet, dass** das Downdraft-Element (200) zweischalig mit zwei Schalenteilen (202a, 202b) ausgebildet ist, wobei die jeweiligen Schalenteile (202a, 202b) bevorzugt spiegelsymmetrisch sind, wobei die Schalenteile (202a, 202b) miteinander verklemmt, verklebt, verschweißt und/oder verschraubt sind.

2. Downdraft-Element (200) nach Anspruch 1, bei dem die Dämpfmaterialaufnahme (201) im Wesentlichen symmetrisch zu der ersten Strömungsöffnung (205) und der zweiten Strömungsöffnung (206) an einer distalen Innenseite (215) des Downdraft-Elements (200) angeordnet ist.

3. Downdraft-Element (200) nach einem der vorhergehenden Ansprüche, bei dem die Dämpfmaterialaufnahme (201) mindestens ein Halteelement (217) aufweist, das den in die Dämpfmaterialaufnahme (201) aufgenommenen Dämpfer (214) kraft- und/oder formschlüssig fixiert.

4. Downdraft-Element (200) nach einem der vorhergehenden Ansprüche, bei dem die Innenseite (214, 215) ein in Strömungsrichtung vor und/oder hinter der Dämpfmaterialaufnahme (201) angeordnetes Strömungsführungselement (212) aufweist, so dass die Innenseite (215, 216) über das Strömungsführungselement (212) im Wesentlichen glatt in die Oberfläche des Dämpfers (214) übergeht.

5. Downdraft-Element (200) nach einem der vorhergehenden Ansprüche, das mindestens einen von der Innenseite (215, 216) beabstandeten, zwischen der ersten Strömungsöffnung (205) und der zweiten Strömungsöffnung (206) angeordneten Leitkörper (207) zur Strömungsführung aufweist.

6. Downdraft-Element (200) nach Anspruch 5, bei dem der Leitkörper (207) mit einer Leitfläche im Wesentlichen parallel beabstandet von der Dämpfmaterialaufnahme (201) und/oder zumindest abschnittsweise der Dämpfmaterialaufnahme (201) zugewandt ist.

7. Downdraft-Element (200) nach einem der vorhergehenden Ansprüche 5 bis 6, bei dem mindestens einer der Leitkörper (207) zumindest teilweise gelocht oder perforiert ist oder mindestens einen Durchbruch aufweist.

8. Downdraft-Element (200) nach einem der vorhergehenden Ansprüche 5 bis 7, bei dem der Leitkörper (207) doppelt gekrümmt ist, wobei eine erste Krümmung (κ₁) im Wesentlichen entlang der mittleren Strömungsrichtung und eine zweite Krümmung (κ₂) im Wesentlichen senkrecht zu der ersten Krümmung (κ₁) angeordnet ist.

9. Downdraft-Element (200) nach Anspruch 8, bei dem die erste Krümmung (κ₁) und/oder die zweite Krümmung (κ₂) mindestens einen Vorzeichenwechsel aufweist.

10. Downdraft-Element (200) nach einem der vorhergehenden Ansprüche, bei dem mindestens eine Innenseite (215, 216), bevorzugt eine distale (215) und/oder eine proximale Innenseite (216), entlang der mittleren Strömungsrichtung zumindest in einem Abschnitt teilkreisbogenartig ausgebildet ist, wobei der lokale Krümmungsradius des Abschnitts bevorzugt variabel ausgebildet ist.

11. Downdraft-Element (200) nach einem der vorhergehenden Ansprüche, das an oder bei der ersten Strömungsöffnung (205) und/oder zweiten Strömungsöffnung (206) eine Befestigungsaufnahme (209) aufweist, in die ein Rohrsystem-Element (219), beispielsweise ein weiteres Downdraft-Element (200), ein Rohr, ein Flachkanal, ein Umlenkstück oder dergleichen, zur Herstellung einer fluidischen Verbindung des Rohrsystem-Elements (219) mit dem Downdraft-Element (200) einführbar ist, wobei bevorzugt ein Anschlag (208) in der Befestigungsaufnahme (209) bevorzugt umlaufend angeordnet ist, der eine definierte Einführtiefe des Rohrsystem-Elements (219) festlegt.

12. Downdraft-Element (200) nach einem der vorhergehenden Ansprüche, das einen Befestigungssteg aufweist, mit dem das Downdraft-Element (200) in ein Rohrsystem-Element (219), beispielsweise ein weiteres Downdraft-Element (200), Rohr, ein Flachkanal, ein Umlenkstück oder dergleichen, zur Herstellung einer fluidischen Verbindung des Downdraft-Elements (200) mit dem Rohrsystem-Element (219) einführbar ist, wobei bevorzugt der Befestigungssteg (210) einen bevorzugt umlaufend angeordneten Anschlag (211) aufweist, der eine definierte Einführtiefe des Downdraft-Elements (200) festlegt.

13. Downdraft-Element (200) nach einem der vorhergehenden Ansprüche, das mindestens eine an und/oder bei der ersten Strömungsöffnung (205) und/oder der zweiten Strömungsöffnung angeordnete Rastnase (203) aufweist, über die das Downdraft-Element (200) lösbar mit einem Rohrsystem-Element (219), beispielsweise einem weiteren Downdraft-Element (200), einem Rohr, einem Flachkanal, einem Umlenkstück oder dergleichen, verbindbar ist.

14. Downdraft-Element (200) nach einem der vorhergehenden Ansprüche, das bevorzugt an einer Außenseite eine Markierung (204) aufweist, die eine Durchströmungsrichtung durch die Strömungsöffnungen (205, 206) mit geringstem mittleren Druckverlust anzeigt.

15. Anordnung aus einem Downdraft-Element (200) nach einem der vorhergehenden Ansprüche und mindestens einem Rohrsystem-Element (219) mit einer Öffnung, wobei
a. das Downdraft-Element (200) an und/oder bei der ersten Strömungsöffnung (205) und/oder der zweiten Strömungsöffnung (206) mindestens eine Rastnase (203) und das Rohrsystem-Element (219) mindestens eine zu der Rastnase (203) komplementäre Rastaufnahme aufweist, über die die erste Strömungsöffnung (205) und/oder die zweiten Strömungsöffnung (206) des Downdraft-Elements (200) und die Öffnung des Rohrsystem-Elements (219) lösbar fluidisch miteinander verbunden sind, und/oder
b. das Downdraft-Element (200) an oder bei der ersten Strömungsöffnung (205) und/oder zweiten Strömungsöffnung (206) eine Befestigungsaufnahme (209) aufweist und das Rohrsystem-Element (219) an der Öffnung einen bevorzugt umlaufenden Befestigungsvorsprung aufweist, wobei der Befestigungsvorsprung in der Befestigungsaufnahme (209) aufgenommen und die erste Strömungsöffnung (205) und/oder die zweite Strömungsöffnung (206) des Downdraft-Elements (200) mit der Öffnung des Rohrsystem-Elements (219) fluidisch verbunden ist, und/oder
c. das Downdraft-Element (200) an oder bei der ersten Strömungsöffnung (205) und/oder zweiten Strömungsöffnung (206) einen Befestigungssteg (210) aufweist und das Rohrsystem-Element (219) an der Öffnung eine Einsteckaufnahme aufweist, wobei der Befestigungssteg (210) in der Einsteckaufnahme aufgenommen und die erste Strömungsöffnung (205) und/oder die zweite Strömungsöffnung (206) des Downdraft-Elements mit der Öffnung des Rohrsystem-Elements (219) fluidisch verbunden ist.

16. Anordnung nach Anspruch 15, bei der das Downdraft-Element (200) mindestens einen Leitkörper (207) zur Strömungsführung und das Rohrsystem-Element mindestens einen Rohrsystem-Strömungsleitkörper (220) aufweist, wobei
a. der Rohrsystem-Strömungsleitkörper (220) in das Downdraft-Element (200) hineinragt und/oder
b. der Rohrsystem-Strömungsleitkörper (220) in den Leitkörper (207) übergeht und/oder in Strömungsrichtung parallel vor und/oder hinter dem Leitkörper (207) angeordnet ist.

## Claims

1. A downdraft element (200) having a first flow opening (205) and a second flow opening (206), wherein the first flow opening (205) is arranged relative to the second flow opening (206) at an angle of 45° ≤ α ≤ 135°, preferably substantially of 90°, so that at least the average flow direction of a fluid entering the first flow opening (205) and exiting the second flow opening (206) or vice versa can be deflected by the angle α, wherein the downdraft element (200) has at least one damping material receptacle (201) and at least one damper (214) inserted into the damping material receptacle (201) on an inner side (215, 216) between the first flow opening (205) and the second flow opening (206), wherein the damper (214) is shaped in such a way that the inner side (215, 216) over which the fluid can flow passes substantially smoothly into the surface of the damper (214), **characterized in that** the downdraft element (200) is formed with two shells with two shell parts (202a, 202b), wherein the respective shell parts (202a, 202b) are preferably mirror-symmetrical, wherein the shell parts (202a, 202b) are clamped, glued, welded and/or screwed to one another.

2. The downdraft element (200) according to claim 1, in which the damping material receptacle (201) is arranged substantially symmetrically to the first flow opening (205) and the second flow opening (206) on a distal inner side (215) of the downdraft element (200).

3. The downdraft element (200) according to one of the preceding claims, in which the damping material receptacle (201) has at least one retaining element (217) which fixes the damper (214) received in the damping material receptacle (201) in a force-fitting and/or form-fitting manner.

4. The downdraft element (200) according to one of the preceding claims, in which the inner side (214, 215) has a flow guiding element (212) arranged upstream and/or downstream of the damping material receptacle (201) in the flow direction, so that the inner side (215, 216) merges substantially smoothly into the surface of the damper (214) via the flow guiding element (212).

5. The downdraft element (200) according to one of the preceding claims, which has at least one guide body (207) spaced apart from the inner side (215, 216) and arranged between the first flow opening (205) and the second flow opening (206) for flow guidance.

6. The downdraft element (200) according to claim 5, in which the guide body (207) is spaced apart substantially parallel from the damping material receptacle (201) with a guide surface and/or faces the damping material receptacle (201) at least in sections.

7. The downdraft element (200) according to one of the preceding claims 5 to 6, in which at least one of the guide bodies (207) is at least partially perforated or has at least one aperture.

8. The downdraft element (200) according to one of the preceding claims 5 to 7, in which the guide body (207) is doubly curved, wherein a first curvature (κ₁) is arranged substantially along the middle flow direction and a second curvature (κ₂) is arranged substantially perpendicular to the first curvature (κ₁).

9. The downdraft element (200) according to claim 8, in which the first curvature (κ₁) and/or the second curvature (κ₂) has at least one sign change.

10. The downdraft element (200) according to one of the preceding claims, in which at least one inner side (215, 216), preferably a distal inner side (215) and/or a proximal inner side (216), is formed in the manner of a partial circular arc along the middle flow direction at least in one section, wherein the local radius of curvature of the section is preferably variable.

11. The downdraft element (200) according to one of the preceding claims, which has, on or at the first flow opening (205) and/or second flow opening (206), a fastening receptacle (209) into which a pipe system element (219), for example a further downdraft element (200), a pipe, a flat channel, a deflection piece or the like, can be inserted in order to establish a fluidic connection of the pipe system element (219) to the downdraft element (200), wherein preferably a stop (208) is arranged preferably circumferentially in the fastening receptacle (209), which stop defines a defined insertion depth of the pipe system element (219).

12. The downdraft element (200) according to one of the preceding claims, which has a fastening web with which the downdraft element (200) can be inserted into a pipe system element (219), for example a further downdraft element (200), pipe, a flat channel, a deflection piece or the like, in order to establish a fluidic connection of the downdraft element (200) to the pipe system element (219), wherein preferably the fastening web (210) has a stop (211) arranged preferably circumferentially, which stop defines a defined insertion depth of the downdraft element (200).

13. The downdraft element (200) according to one of the preceding claims, which has at least one latching lug (203) arranged on and/or at the first flow opening (205) and/or the second flow opening, via which latching lug the downdraft element (200) can be detachably connected to a pipe system element (219), for example a further downdraft element (200), a pipe, a flat channel, a deflection piece or the like.

14. The downdraft element (200) according to one of the preceding claims, which preferably has a marking (204) on an outer side, which marking indicates a throughflow direction through the flow openings (205, 206) with the lowest medium pressure loss.

15. An assembly comprising a downdraft element (200) according to one of the preceding claims and at least one pipe system element (219) with an opening, wherein
a. the downdraft element (200) has, on and/or at the first flow opening (205) and/or the second flow opening (206), at least one latching lug (203) and the pipe system element (219) has at least one latching receptacle complementary to the latching lug (203), via which latching receptacle the first flow opening (205) and/or the second flow opening (206) of the downdraft element (200) and the opening of the pipe system element (219) are detachably fluidically connected to one another, and/or
b. the downdraft element (200) has, on or at the first flow opening (205) and/or second flow opening (206), a fastening receptacle (209) and the pipe system element (219) has, on the opening, a preferably circumferential fastening projection, wherein the fastening projection is received in the fastening receptacle (209) and the first flow opening (205) and/or the second flow opening (206) of the downdraft element (200) is/are fluidically connected to the opening of the pipe system element (219), and/or
c. the downdraft element (200) has, on or at the first flow opening (205) and/or second flow opening (206), a fastening web (210) and the pipe system element (219) has, on the opening, an insertion receptacle, wherein the fastening web (210) is received in the insertion receptacle and the first flow opening (205) and/or the second flow opening (206) of the downdraft element is/are fluidically connected to the opening of the pipe system element (219).

16. The assembly according to claim 15, in which the downdraft element (200) has at least one guide body (207) for flow guidance and the pipe system element has at least one pipe system flow guide body (220), wherein
a. the pipe system flow guide body (220) projects into the downdraft element (200) and/or
b. the pipe system flow guide body (220) merges into the guide body (207) and/or is arranged parallel upstream and/or downstream of the guide body (207) in the flow direction.

## Revendications

1. Élément à courant descendant (200) avec une première ouverture d'écoulement (205) et une deuxième ouverture d'écoulement (206), dans lequel la première ouverture d'écoulement (205) est disposée, par rapport à la deuxième ouverture d'écoulement (206), avec un angle 45° ≤ α ≤ 135°, de préférence globalement de 90°, de sorte qu'au moins la direction d'écoulement moyenne d'un fluide entrant dans la première ouverture d'écoulement (205) et sortant de la deuxième ouverture d'écoulement (206), ou inversement, peut être déviée de l'angle α, dans lequel l'élément à courant descendant (200) présente, sur une face interne (215, 216) entre la première ouverture d'écoulement (205) et la deuxième ouverture d'écoulement (206), au moins un logement de matériau d'amortissement (201) et au moins un amortisseur (214) inséré dans le logement de matériau d'amortissement (201), dans lequel l'amortisseur (214) est formé de sorte que la face interne (215, 216) pouvant être submergée par le fluide se transforme, de manière globalement lisse, dans la surface de l'amortisseur (214), **caractérisé en ce que** l'élément à courant descendant (200) est réalisé en deux coques avec deux parties de coques (202a, 202b), dans lequel les parties de coques (202a, 202b) respectives présentent, de préférence une symétrie en miroir, dans lequel les parties de coques (202a, 202b) sont serrées, collées, soudées et/ou vissées l'une à l'autre.

2. Élément à courant descendant (200) selon la revendication 1, dans lequel le logement de matériau d'amortissement (201) est disposé, de manière globalement symétrique par rapport à la première ouverture d'écoulement (205) et la deuxième ouverture d'écoulement (206), sur une face interne distale (215) de l'élément à courant descendant (200).

3. Élément à courant descendant (200) selon l'une des revendications précédentes, dans lequel le logement de matériau d'amortissement (201) comprend au moins un élément de maintien (217) qui fixe par force et/ou par complémentarité de forme l'amortisseur (214) logé dans le logement de matériau d'amortissement (201).

4. Élément à courant descendant (200) selon l'une des revendications précédentes, dans lequel la face interne (214, 215) comprend un élément de guidage d'écoulement (212) disposé, dans la direction d'écoulement, avant et/ou après le logement de matériau d'amortissement (201), de sorte que la face interne (215, 216) se transforme, par l'intermédiaire de l'élément de guidage d'écoulement (212), de manière globalement lisse, dans la surface de l'amortisseur (214).

5. Élément à courant descendant (200) selon l'une des revendications précédentes, qui comprend au moins un corps de guidage (207), pour le guidage de l'écoulement, disposé à distance de la face interne (215, 216), entre la première ouverture d'écoulement (205) et la deuxième ouverture d'écoulement (206).

6. Élément à courant descendant (200) selon la revendication 5, dans lequel le corps de guidage (207) est orienté, avec une surface de guidage, de manière globalement parallèle à distance du logement de matériau d'amortissement (201) et/ou, au moins à certains endroits, vers le logement de matériau d'amortissement (201).

7. Élément à courant descendant (200) selon l'une des revendications précédentes 5 à 6, dans lequel au moins un des corps de guidage (207) est troué ou perforé au moins partiellement ou présente une percée.

8. Élément à courant descendant (200) selon l'une des revendications précédentes 5 à 7, dans lequel le corps de guidage (207) est doublement incurvé, dans lequel une première courbure (κ₁) est disposée globalement le long de la direction d'écoulement moyenne et une deuxième courbure (κ₂) est disposée globalement perpendiculairement à la première courbure (κ₁).

9. Élément à courant descendant (200) selon la revendication 8, dans lequel la première courbure (κ₁) et/ou la deuxième courbure (κ₂) présente au moins un changement de signe.

10. Élément à courant descendant (200) selon l'une des revendications précédentes, dans lequel au moins une face interne (215, 216), de préférence une face interne distale (215) et/ou une face interne proximale (216), présente la forme d'un arc de cercle partiel le long de la direction d'écoulement moyenne, au moins dans une portion, dans lequel le rayon de courbure local de la portion est de préférence variable.

11. Élément à courant descendant (200) selon l'une des revendications précédentes, qui présente, sur ou au niveau de la première ouverture d'écoulement (205) et/ou de la deuxième ouverture d'écoulement (206), un logement de fixation (209), dans lequel un élément de système de canalisations (219), par exemple un autre élément à courant descendant (200), un tube, un canal plat, une pièce de dérivation ou autre, peut être introduit afin d'établir une liaison fluidique de l'élément du système de canalisations (219) avec l'élément à courant descendant (200), dans lequel, de préférence, une butée (208) est disposée, de préférence de manière périphérique, dans le logement de fixation (209), qui détermine une profondeur d'introduction définie de l'élément de système de canalisations (219).

12. Élément à courant descendant (200) selon l'une des revendications précédentes, qui présente une nervure de fixation avec laquelle l'élément à courant descendant (200) peut être introduit dans un élément de système de canalisations (219), par exemple un autre élément à courant descendant (200), un tube, un canal plat, une pièce de dérivation ou autre, peut être introduit afin d'établir une liaison fluidique de l'élément à courant descendant (200) avec l'élément de système de canalisations (219), dans lequel, de préférence, la nervure de fixation (210) comprend une butée (211) disposée de préférence de manière périphérique, qui détermine une profondeur d'introduction définie de l'élément à courant descendant (200).

13. Élément à courant descendant (200) selon l'une des revendications précédentes, qui présente au moins un embout d'encliquetage (203) disposé sur et/ou au niveau de la première ouverture d'écoulement (205) et/ou de la deuxième ouverture d'écoulement, par l'intermédiaire duquel l'élément à courant descendant (200) peut être relié de manière amovible avec un élément de système de canalisations (219), par exemple n autre élément à courant descendant (200), un tube, un canal plat, une pièce de dérivation ou autre.

14. Élément à courant descendant (200) selon l'une des revendications précédentes, qui présente, de préférence sur une face externe, un marquage (204), qui indique une direction d'écoulement à travers les ouvertures d'écoulement (205, 206) avec la perte de pression moyenne la plus faible.

15. Dispositif constitué d'un élément à courant descendant (200) selon l'une des revendications précédentes et d'au moins un élément de système de canalisations (219) avec une ouverture, dans lequel
a. l'élément à courant descendant (200) comprend, sur et/ou au niveau de la première ouverture d'écoulement (205) et/ou de la deuxième ouverture d'écoulement (206), au moins un embout d'encliquetage (203) et l'élément de système de canalisations (219) comprend un logement d'encliquetage complémentaire de l'embout d'encliquetage (203), par l'intermédiaire duquel la première ouverture d'écoulement (205) et/ou la deuxième ouverture d'écoulement (206) de l'élément à courant descendant (200) et l'ouverture de l'élément de système de canalisations (219) sont reliées entre elles de manière fluidique et amovible et/ou
b. l'élément à courant descendant (200) comprend, sur et/ou au niveau de la première ouverture d'écoulement (205) et/ou de la deuxième ouverture d'écoulement (206), un logement de fixation (209) et l'élément de système de canalisations (219) comprend, sur l'ouverture, une saillie de fixation, de préférence circulaire, dans lequel la saillie de fixation logée dans le logement de fixation (209) et la première ouverture d'écoulement (205) et/ou la deuxième ouverture d'écoulement (206) de l'élément à courant descendant (200) est reliée de manière fluidique avec l'ouverture de l'élément de système de canalisations (219) et/ou
c. l'élément à courant descendant (200) comprend, sur et/ou au niveau de la première ouverture d'écoulement (205) et/ou de la deuxième ouverture d'écoulement (206), une nervure de fixation (210) et l'élément de système de canalisations (219) comprend, sur l'ouverture, un logement d'enfichage, dans lequel la nervure de fixation (210) est logée dans le logement d'enfichage et la première ouverture d'écoulement (205) et/ou la deuxième ouverture d'écoulement (206) de l'élément à courant descendant (200) est reliée de manière fluidique avec l'ouverture de l'élément de système de canalisations (219).

16. Dispositif selon la revendication 15, dans lequel l'élément à courant descendant (200) comprend au moins un corps de guidage (207) pour le guidage de l'écoulement et l'élément de système de canalisations comprend au moins un corps de guidage d'écoulement de système de canalisations (220), dans lequel
a. le corps de guidage d'écoulement de système de canalisations (220) pénètre dans l'élément à courant descendant (200) et/ou
b. le corps de guidage d'écoulement de système de canalisations (220) se transforme dans le corps de guidage (207) et/ou est disposé parallèlement, avant et/ou après le corps de guidage (207), dans la direction d'écoulement.
